Europäisches Patentamt

European Patent Office

Office européen des brevets

(19)

(11) Numéro de publication : **0 321 332 B1**

(12)

# FASCICULE DE BREVET EUROPEEN

(45) Date de publication du fascicule du brevet :
**11.03.92 Bulletin 92/11**

(51) Int. Cl.⁵ : **H02K 29/00**

(21) Numéro de dépôt : **88403163.4**

(22) Date de dépôt : **13.12.88**

(54) **Moteur électrique à haut rendement et à faible ondulation de couple.**

(30) Priorité : **16.12.87 FR 8717556**

(43) Date de publication de la demande :
**21.06.89 Bulletin 89/25**

(45) Mention de la délivrance du brevet :
**11.03.92 Bulletin 92/11**

(84) Etats contractants désignés :
**CH DE GB LI NL**

(56) Documents cités :
**EP-A- 0 072 747**
**DE-A- 2 358 030**
**FR-E- 72 591**
**PATENT ABSTRACTS OF JAPAN, vol. 7, no. 99**
**(E-172)[1244], 27 avril 1983, page 154 E 172 &**
**JP-A-58 22 571**
**PATENT ABSTRACTS OF JAPAN, vol. 9, no.**
**266 (E-352)[1989], 23 octobre 1985, page 166 E**
**352 & JP-A-60 113 647**

(73) Titulaire : **AEROSPATIALE Société Nationale**
**Industrielle**
**37, Boulevard de Montmorency**
**F-75781 Paris Cédex 16 (FR)**

(72) Inventeur : **Vaillant de Guelis, Hubert**
**16, Allée Edith Piaf**
**F-78410 Aubergenville (FR)**
Inventeur : **Jamain, Patrice**
**92, côte de Beulle**
**F-78580 Maule (FR)**
Inventeur : **Roland, Jean-Pierre**
**Route de la vallée du Roy Vienne en Arthie**
**F-95510 Vetheuil (FR)**

(74) Mandataire : **Rinuy, Santarelli**
**14, avenue de la Grande Armée**
**F-75017 Paris (FR)**

## Description

La présente invention concerne un moteur électrique du type "sans fer".

Un tel moteur électrique est souvent rotatif (ou circulaire) mais peut aussi être linéaire.

Lorsqu'un tel moteur est mis en oeuvre dans le domaine spatial, il est souvent associé à un ou plusieurs palier(s) magnétique(s).

On cherche en pratique à minimiser la consommation énergétique des paliers magnétiques, ce qui impose de réduire autant que possible les perturbations, en particulier celles venant des moteurs associés. Les moteurs "sans fer" sont à cet effet préférés aux moteurs "à fer" dont le principal inconvénient est leur raideur radiale.

Une application classique mais non limitative de ces moteurs "sans fer" a trait aux paliers magnétiques de roues de satellite, où est imposé un environnement sévère du point de vue vide et du point de vue plage de températures admissibles.

De tels moteurs sont notamment décrits dans les brevets français 2050284, 2257077, 2294430 et 2384174 appartenant à la Demanderesse.

Ces moteurs, de type rotatif triphasé, comportent un rotor mobile en rotation par rapport à un stator. Le stator porte une bande excitatrice cylindrique coaxiale au rotor formée d'une triple pluralité de spires de bobinages alternés et connectés en série au sein de chaque pluralité, situées circonférentiellement dans le prolongement les unes des autres. Ces pluralités de spires, correspondant chacune à une phase électrique, sont respectivement connectées à une source de courant au travers d'un commutateur adapté à y faire circuler du courant en alternance. Cette bande excitatrice est disposée dans un entrefer annulaire longeant une couronne d'aimants permanents à aimantation radiale alternée dont les flux se referment dans des couronnes magnétiques de fermeture disposées de part et d'autre radialement de cet entrefer et de cette couronne d'aimants permanents.

Les courants qui circulent dans les pluralités de spires interagissent avec le champ magnétique des aimants en sorte de générer un couple moteur défini par la loi de LAPLACE.

Les aimants permanents sont en pratique décalés circonférentiellement les uns des autres de manière à minimiser les courants de FOUCAULT (très importants dans le cas de moteurs de grand diamètre à cause des grandes vitesses relatives rotor/stator), ce qui se traduit par une ondulation non négligeable du couple du moteur du fait des zones de commutation entre phases électriques successives.

L'invention a pour objet de réduire très fortement l'ondulation du couple moteur et de diminuer les phénomènes de trainée générés par les courants de FOUCAULT, donc d'augmenter le rendement du moteur même lorsque les aimants du rotor sont très proches des pièces métalliques du stator.

L'invention propose à cet effet, de manière très générale, un moteur électrique polyphasé comportant un corps mobile selon un degré de liberté sur une trajectoire par rapport à un corps fixe, l'un de ces corps portant une bande excitatrice formée d'un jeu de pluralités de spires bobinées alternées disposées dans le prolongement les unes des autres et présentant des brins perpendiculaires à la trajectoire, à raison d'une pluralité de spires par phase électrique, cette bande excitatrice étant connectée à un dispositif d'alimentation comportant un commutateur adapté à exciter ces pluralités de spires en alternance, l'autre de ces corps comportant une rangée formée d'une double pluralité d'aimants à aimantation transversale à la trajectoire et à sens d'aimantation alternés ainsi que, de part et d'autre de cette rangée, deux barreaux magnétiques déterminant le long de la rangée un entrefer de largeur constante dans lequel est disposé la bande excitatrice, ce moteur étant caractérisée en ce que la rangée à aimantation permanente est enserrée, parallèlement aux sens d'aimantation des aimants qui la constituent, de deux plaques magnétiques continues en matériau magnétique doux.

Une telle disposition permet de réduire les pertes par courants de FOUCAULT grâce aux pièces magnétiques additionnelles qui referment les flux magnétiques, évitant ainsi les fuites.

Les aimants peuvent alors être montés jointifs sur la périphérie du moteur, ce qui a pour intérêt d'éviter l'utilisation des aimants trop près de leurs extrémités, là où la champ magnétique s'affaiblit. L'allongement des secteurs d'aimant, consécutif à leur montage jointif, permet d'obtenir sur chaque secteur une zone d'induction magnétique constante plus importante, créant ainsi un couple moteur constant sur un angle de rotation plus important. Cet avantage permet d'avoir un recoupement de couple moteur entre les phases pratiquement sans perte de couple, donc sans ondulation de couple.

Le moteur selon l'invention est, selon les besoins, de type linéaire ou rotatif, les spires et les aimants étant portés respectivement par le stator ou le rotor, ou inversement.

Son fonctionnement n'est pas altéré par le vide et/ou la température.

Le moteur selon l'invention peut comporter plusieurs groupes (aimants + spires) pour des raisons de redondance et/ou de guidage.

Des objets, caractéristiques et avantages de l'invention ressortent de la description qui suit, donnée à titre d'exemple illustratif non limitatif, en regard des dessins annexés sur lesquels :

   – la figure 1 est une demie vue schématique partielle en coupe axiale d'un moteur "sans fer" conforme à l'invention ;

   – la figure 2 en est une vue partielle en perspective ;

– la figure 3 en est une vue schématique partielle selon la flèche III de la figure 2 ;

– la figure 4 est un graphique donnant pour ce moteur le couple moteur C en fonction de l'angle β entre rotor et stator ;

– la figure 5 est une vue analogue à celle de la figure 3 pour un moteur linéaire selon l'invention ; et

– la figure 6 en est une vue partielle en coupe selon la ligne VI-VI de la figure 5.

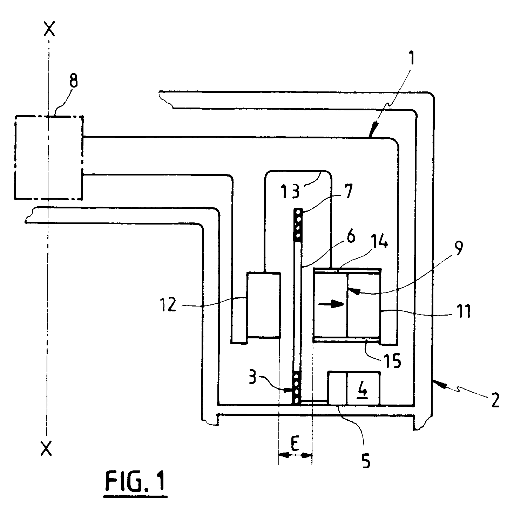

Les figures 1 à 3 montrent de façon schématique un moteur électrique "sans fer" conforme à l'invention comportant un rotor 1 mobile en rotation, selon une trajectoire D autour d'un axe X-X, par rapport à une structure fixe 2 formant stator.

La structure fixe 2 comporte notamment un carter déterminant un volume à symétrie axiale autour de X-X dans lequel le rotor se meut en rotation.

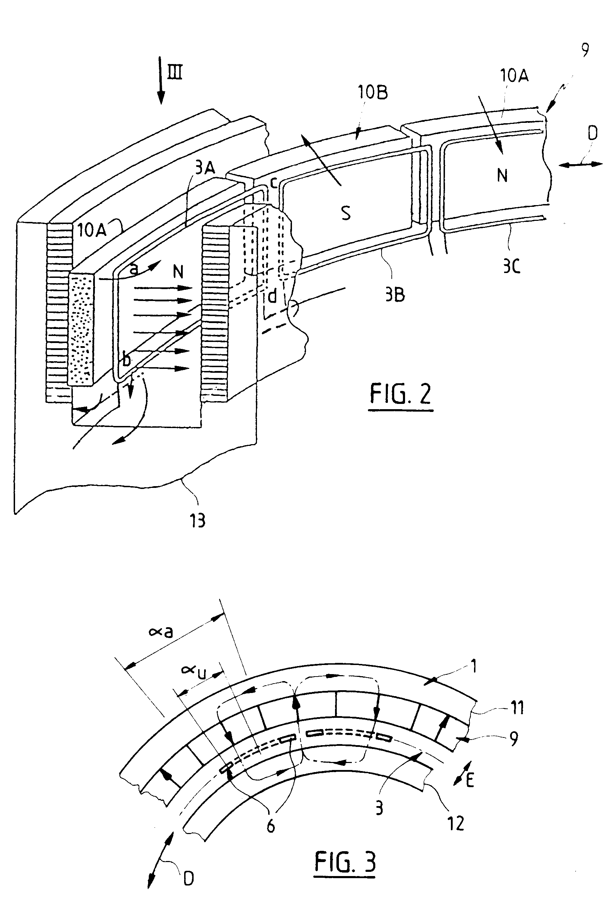

A cette structure fixe est fixée, de manière connue, une bande cylindrique excitatrice 3 formée d'une triple pluralité de spires bobinées 3A, 3B, 3C alternées situées circonférentiellement dans le prolongement les unes des autres (voir la figure 2) en sorte de former une série annulaire de spires ABCABCA....., toutes les spires A (ou B ou C) d'une des pluralités étant connectées électriquement les unes aux autres et définissant une phase électrique du moteur (il s'agit donc ici d'un moteur triphasé). Ces trois phases A, B et C sont alimentées électriquement de façon séparée l'une après l'autre, sans discontinuité par un dispositif d'alimentation schématisé en 4 suivant les ordres donnés par un commutateur schématisé en 5 en relation avec la position angulaire relative rotor/stator relevée par des capteurs non représentés.

Ces spires ont ici une forme sensiblement rectangulaire et comportent des brins ou fils axiaux 6 raccordés à des brins ou fils circonférentiels 7.

La structure de cette bande excitatrice 3 et de son dispositif d'alimentation 4-5 est bien connue, notamment de par les documents précités, et ne sera pas ici précisée davantage.

Le rotor 1 est guidé en rotation et maintenu axialement et radialement par des paliers magnétiques de tout type approprié schématisés en 8.

Il comporte en regard radialement de la bande excitatrice 3 une couronne 9 à aimantation permanente formée, de façon connue en soi, d'une série annulaire d'aimants permanents à aimantation radiale de module égal mais avec un sens d'aimantation qui s'inverse d'un aimant 10A à l'autre 10B.

Ces aimants à aimantation alternée sont sensiblement jointifs.

Cette couronne 9 à aimantation permanente est longée par une couronne 11 en matériau magnétique tandis qu'une autre couronne 12, également en matériau magnétique, est décalée radialement vis à vis de la couronne aimantée 9, à l'opposé de la couronne magnétique, en sorte de déterminer un entrefer radial E, d'épaisseur constante, dans lequel est engagée la bande excitatrice 3.

Ces couronnes 9, 11 et 12 sont portées par un volant 13 en matériau amagnétique situé, au-dessus de l'entrefer à la figure 1, et en-dessous de celui-ci à la figure 2.

Dans l'exemple représenté la couronne aimantée 9 est disposée radialement à l'extérieur de l'entrefer E.

Des plaques annulaires 14 et 15 en matériau magnétique enserrent axialement la couronne aimantée 9.

Ces plaques se prolongent ici radialement jusqu'à enserrer également la couronne magnétique adjacente 11 qui se trouve avoir la même dimension axiale que la couronne aimantée 9.

Ainsi qu'il ressort de la figure 3 les flux d'induction de chaque aimant 10A ou 10B se referment transversalement à l'axe X-X au travers des couronnes magnétiques 11 et 12 et au travers des aimants adjacents 10B ou 10A.

Grâce aux plaques annulaires 14 et 15 les flux de fuite se referment également parallèlement à l'axe X-X.

Les aimants occupent des secteurs angulaires égaux d'amplitude $\alpha$ a. Leur champ magnétique radial, sensiblement constant, s'affaiblit en pratique auprès de leurs tranches axiales.

Lorsque les spires d'une même phase, par exemple les spires 3A, sont alimentées en courant (et non en tension) sous le contrôle du commutateur 5, les ampères qui circulent dans les brins axiaux 6 provoquent, par interaction avec le champ magnétique des aimants en regard, l'apparition d'une force dont le sens et le module sont déterminés par la loi de LAPLACE. Il en résulte un couple $C_A$ appliqué au rotor ; son évolution avec l'angle relatif rotor/stator β est représentée par la courbe $C_A$ de la figure 3. L'activation subséquente des spires 3B génère de façon similaire un couple de courbe $C_B$.

Soit $\beta_A$ la position angulaire rotor/stator pour laquelle le commutateur déclenche l'activation de la phase A et $\beta_B$ la position pour laquelle on déclenche celle de la phase B. L'écart $\alpha_u$ entre ces positions angulaires, définit un angle utile de chaque phase.

A proximité de ces valeurs $\beta_A$ et $\beta_B$ il y a pour $C_A$ et $C_B$ une perte de couple C due à la proximité de l'extrémité de l'aimant vis à vis des brins 6 considérés. Cette perte est d'autant plus faible que $\alpha_u$ est petit par rapport à $\alpha_a$.

Les pertes de couple C provoquent une ondulation du couple moteur global C dont l'amplitude dépend :

– du rapport $\alpha_u/\alpha_a$, et

– du gradient de vitesse de commutation et de mise en courant de chaque phase.

Pour réduire l'amplitude de ces ondulations il faut que la forme de la courbe $C_A$ ou $C_B$ soit la plus rectangulaire possible, c'est-à-dire que $\alpha_u$ soit petit par rapport à $\alpha_a$. Ceci permet d'éviter l'utilisation des extrémités circonférentielles des aimants. Cela est rendu possible en mettant les aimants jointifs.

De manière préférée le rapport $\alpha_u/\alpha_a$ est choisi entre 1/2 et 2/3, de préférence égal à 1/2 pour les moteurs à 4 phases et à 2/3 pour les moteurs à 3 phases.

Les plaques magnétiques de fermeture 14 et 15 absorbent les variations de flux entre les aimants jointifs, limitant ainsi les courants de FOUCAULT qui prennent naissance dans le stator et freinent le rotor. La présence de ces plaques permet de réduire dans un rapport de 10 environ ces forces de freinage dues à la proximité des pièces métalliques du stator vis à vis du rotor.

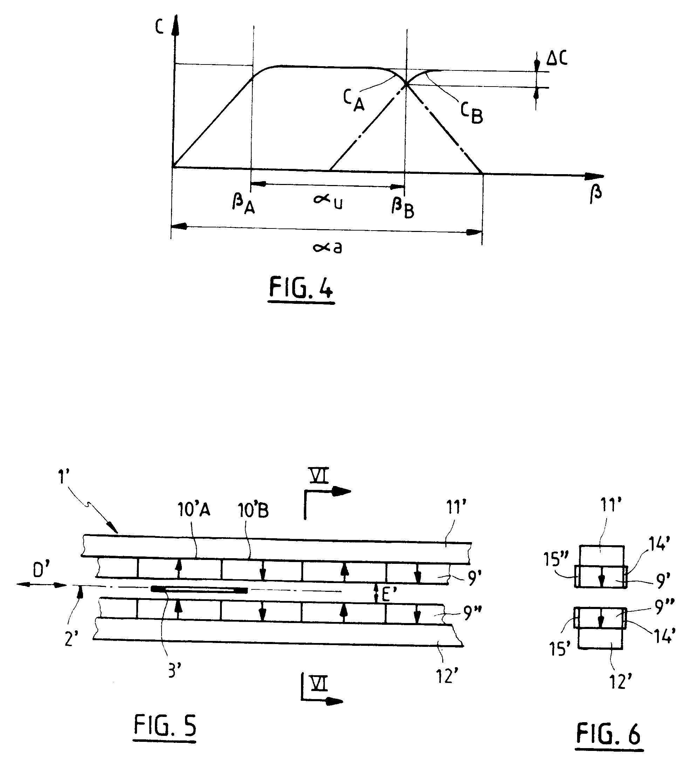

Les figures 5 et 6 représentent un autre exemple de moteur selon l'invention, de type linéaire.

Des spires 3'A, 3'B, 3'C y définissent une bande excitatrice parallèle à une trajectoire D', sensiblement plane, disposée dans un entrefer E', ici délimité par deux rangées 9' et 9" d'aimants permanents à aimantation transversale alternée (une seule de ces rangées pourrait suffire), les aimants 10'A, 10'B de chaque rangée ayant le même sens d'aimantation que les aimants en regard. Ces rangées aimantées 9' et 9" sont toutes deux longées, à l'opposé de l'entrefer E', par des barreaux magnétiques 11' et 12', en étant enserrées par des lames magnétiques 14' et 15' de fermeture des flux de fuite. Ces lames ne se prolongent pas ici jusqu'à enserrer les barreaux 11' et 12' (mais cela pourrait être le cas).

Les mêmes relations d'amplitude notées, $l_a$ et $l_u$, (amplitudes linéaires) s'appliquent ici.

En fait, de manière très générale, dans le cas d'aimants jointifs, et par construction le rapport $\dfrac{\alpha_u}{\alpha_a}$ vaut 2/3 pour 3 phases et 1/2 pour 4 phases.

Si R est le rayon moyen des aimants il faut, pour limiter au maximum le phénomène de perte de champ aux extrémités des aimants que $\dfrac{(\alpha u - \alpha a)}{2}$ R soit le plus important possible (on raisonne sur $\dfrac{\ell u - \ell a}{2}$ dans le cas d'un moteur linéaire).

Pour ce faire, il y a 3 possibilités :
– augmenter le rayon moyen R,
– augmenter le nombre de phases,
– utiliser des aimants jointifs (plaques 14 et 15 pour éviter les courant de Foucault).

Plus il y aura de pôles plus il y aura de bobines par phase.

Les spires excitatrices peuvent être portées par un élément mobile tandis que les aimants peuvent être portés par un élément fixe. De même, plusieurs ensembles aimants-spires peuvent être montés entre un élément mobile et un élément fixe, l'un au dessus de l'autre ou côte à côte, éventuellement en contact, voire comportant des pièces communes (aimants, et/ou plusieurs plaques et barreaux magnétiques).

## Revendications

1. Moteur électrique polyphasé comportant un corps (1) mobile selon un degré de liberté sur une trajectoire par rapport à un corps fixe, l'un (2, 2') de ces corps portant une bande excitatrice (3, 3') formée d'un jeu de pluralités de spires bobinées (3A, 3B, 3C) alternées disposées dans le prolongement les unes des autres et présentant des brins perpendiculaires à la trajectoire, à raison d'une pluralité de spires par phase électrique, cette bande excitatrice étant connectée à un dispositif d'alimentation (4) comportant un commutateur (5) adapté à exciter ces pluralités de spires en alternance, l'autre de ces corps (1, 1') comportant une rangée (9, 9', 9") formée d'une double pluralité d'aimants à aimantation transversale à la trajectoire et à sens d'aimantation alternés ainsi que, de part et d'autre de cette rangée, deux barreaux magnétiques (11, 11', 12, 12') déterminant le long de la rangée un entrefer (E, E') de largeur constante dans lequel est disposé la bande excitatrice, ce moteur étant caractérisé en ce que la rangée (9, 9', 9") à aimantation permanente est enserrée, parallèlement aux sens d'aimantation des aimants qui la constituent, par deux plaques magnétiques continues en matériau magnétique doux (14, 15, 14', 15').

2. Moteur selon la revendication 1, caractérisé en ce que la bande excitatrice (3', 3") est portée par le corps fixe (2, 2') tandis que la rangée (9, 9', 9") à aimantation permanente, les barreaux et les plaques magnétiques sont portés par le corps mobile.

3. Moteur selon la revendication 1 ou la revendication 2, caractérisé en ce qu'il comporte deux rangées, (9', 9") à aimantation permanente de part et d'autre de l'entrefer (E').

4. Moteur selon l'une quelconque des revendications 1 à 3, caractérisé en ce que les plaques (14, 15) enserrant la rangée (9) à aimantation permanente se prolongent en sorte d'enserrer également le barreau magnétique adjacent (11).

5. Moteur selon l'une quelconque des revendications 1 à 4, caractérisé en ce que le corps mobile (1) est un rotor mobile en rotation par rapport au corps fixe formant stator (2), la rangée à aimantation permanente (9), la bande excitatrice, les barreaux (11, 12) et les plaques (14, 15) magnétiques étant annulaires.

6. Moteur selon l'une quelconque des revendication 1 à 4, caractérisé en ce que le corps mobile (1') a une trajectoire linéaire par rapport au corps fixe.

7. Moteur selon l'une quelconque des revendications 1 à 6 caractérisé en ce que, le rapport de l'amplitude ($\alpha_A$, $\ell_A$) de chaque aimant à celle de l'amplitude

utile ($\alpha_u$, $\ell_u$) de chaque spire est compris entre 3/2 pour 3 phases et 2 pour 4 phases.

## Patentansprüche

1. Mehrphasen-Elektromotor mit einem Körper (1), der auf einer Bahn mit einem Freiheitsgrad relativ zu einem feststehenden Körper beweglich ist, wobei der eine (2, 2') dieser Körper ein Erregerband (3, 3') trägt, das aus einem Satz von Gruppen von alternierend gewickelten Windungen (3A, 3B, 3C) gebildet ist, die jeweils in Verlängerung aneinandergereiht sind und Drähte senkrecht zu der Bahn aufweisen und jeweils eine Windungsgruppe pro Phase vorgesehen ist, wobei ferner das Erregerband an eine Versorgungseinrichtung (4) angeschlossen ist, die einen Kommutator (5) aufweist, der geeignet ist, die Windungsgruppen alternierend zu erregen, wobei ferner der andere der Körper (1, 1') ein Reihe (9, 9', 9'') aus zwei Gruppen von Magneten mit einer Magnetisierung quer zu der Bahn und mit alternierender Magnetisierungsrichtung sowie zu beiden Seiten dieser Reihen zwei magnetische Stäbe (11, 11', 12, 12') aufweist, die entlang der Reihe einen Spalt (E, E') von konstanter Breite definieren, in dem das Erregerband angeordnet ist, welcher Elektromotor dadurch gekennzeichnet ist, daß die Reihe (9, 9', 9'') mit permanenter Magnetisierung von zwei durchgehenden magnetischen Platten aus magnetischem Weichmaterial (14, 15, 14', 15') parallel zur Magnetisierungsrichtung der die Reihe bildenden Magneten eingefaßt ist.

2. Motor nach Anspruch 1, dadurch gekennzeichnet, daß das Erregerband (3', 3'') von dem feststehenden Körper (2, 2') getragen wird, während die Reihe (9, 9', 9'') mit permanenter Magnetisierung, die Stäbe und die magnetischen Platten von dem beweglichen Körper getragen werden.

3. Motor nach Anspruch 1 oder 2, dadurch gekennzeichnet, daß er zwei Reihen (9', 9'') mit permanenter Magnetisierung zu beiden Seiten des Spaltes (E') aufweist.

4. Motor nach einem der Ansprüche 1 bis 3, dadurch gekennzeichnet, daß die die Reihe (9) mit permanenter Magnetisierung einfassenden Platten (14, 15) sich so fortsetzen, daß sie gleichermaßen den benachbarten magnetischen Stab (11) einfassen.

5. Motor nach einem der Ansprüche 1 bis 4, dadurch gekennzeichnet, daß der bewegliche Körper (1) ein Rotor ist, der rotierbar gegenüber dem feststehenden, den Stator (2) bildenden Körper ist, wobei die Reihe mit permanenter Magnetisierung (9), das Erregerband, die Stäbe (11, 12) und die magnetischen Platten (14, 15) ringförmig sind.

6. Motor nach einem der Ansprüche 1 bis 4, dadurch gekennzeichnet, daß die Bewegungsbahn des beweglichen Körpers (1') linear in Bezug auf den feststehenden Körper ist.

7. Motor nach einem der Ansprüche 1 bis 6, dadurch gekennzeichnet, daß das Verhältnis der Amplitude ($\alpha_A$, $\ell_A$) eines jeden Magneten zu demjenigen der nutzbaren Amplitude ($\alpha_U$, $\ell_U$) einer jeden Windung zwischen 3/2 für 3 Phasen und 2 für 4 Phasen liegt.

## Claims

1. Multiphase electric motor comprising a body (1) mobile with one degree of freedom along a path relative to a fixed body, one (2, 2') of the bodies carrying an exciter strip (3, 3') formed by a set of pluralities of alternately wound coils (3A, 3B, 3C) aligned with each other and comprising strands perpendicular to the path, there being one plurality of coils per electrical phase, the exciter strip being connected to a supply device (4) including a switch (5) adapted to excite the pluralities of coils alternately, the other body (1, 1') comprising a row (9, 9', 9'') formed by a twofold plurality of magnets magnetised transversely to the path and in alternate magnetisation directions and, on either side of this row, two magnetic bars (11, 11', 12, 12') defining along the row an airgap (E, E') of constant width in which the excites strip is disposed, the motor being characterised in that the permanently magnetised row (9, 9', 9'') is disposed, parallel to the magnetisation directions of the magnets which constitute it, between two continuous magnetic plates of a soft magnetic material (14, 15, 14', 15').

2. Motor according to claim 1, characterised in that the exciter strip (3', 3'') is carried by the fixed body (2, 2') and the permanently magnetised row (9, 9', 9''), the bars and the magnetic plates are carried by the mobile body.

3. Motor according to claim 1 or claim 2, characterised in that it comprises two permanently magnetised rows (9', 9'') one on each side of the airgap (E').

4. Motor according to any one of claims 1 to 3, characterised in that the plates (14, 15) between which the permanently magnetised row (9) is disposed are extended so that the adjacent magnetic bar (11) is also disposed between them.

5. Motor according to any one of claims 1 to 4, characterised in that the mobile body (1) is a rotor mobile in rotation relative to the fixed body forming a stator (2), the permanently magnetised row (9), the exciter strip, the bars (11, 12) and the magnetic plates (14, 15) being annular.

6. Motor according to any one of claims 1 to 4, characterised in that the mobile body (1') has a linear path relative to the fixed body.

7. Motor according to any one of claims 1 to 6, characterised in that the ratio of the amplitude ($\alpha_A$, $l_A$)

of each magnet to that of the usable amplitude ($\alpha_u$, $I_u$) of each coil is between 3/2 for three phases and 2/1 for four phases.

FIG. 1

FIG. 2

FIG. 3

FIG. 4

FIG. 5

FIG. 6